# DEMANDE DE BREVET EUROPEEN

(11) **EP 3 859 961 A1**
(43) Date de publication de la demande: **04.08.2021**
(21) Numéro de dépôt: 21154370.7
(22) Date de dépôt: 29.01.2021
(51) Int. Cl.: H02M 5/458, H02M 1/00, H02M 7/217

(54) **DISPOSITIF D'ALIMENTATION EN ÉNERGIE ÉLECTRIQUE POUR UN CIRCUIT TRIPHASÉ ET UN CIRCUIT MONOPHASÉ, CHAÎNE DE CONVERSION D'ÉNERGIE AUXILIAIRE ET VÉHICULE ÉLECTRIQUE ASSOCIÉS**

(30) Priorité: 31.01.2020 FR 2000976
(71) Demandeur: ALSTOM Transport Technologies, 93400 Saint-Ouen (FR)
(72) Inventeur: CARDARELLI, Felice, 7134 LEVAL-TRAHEGNIES (BE); BOU SAADA, Johnny, B-1330 RIXENSART (BE)
(74) Mandataire: Lavoix

(57) **Abrégé**

Dispositif d'alimentation (20) en énergie électrique pour un circuit triphasé et un circuit monophasé, le dispositif d'alimentation comprenant un redresseur (60) configuré pour convertir une première tension alternative en une deuxième tension continue et comportant deux bornes d'entrée (72) pour la première tension et deux bornes de sortie (74) pour la deuxième tension ; un onduleur (64) configuré pour convertir la deuxième tension en trois troisièmes tensions triphasées et comportant deux bornes d'entrée (92) pour la deuxième tension et trois bornes de sortie (94) pour les trois troisièmes tensions ; et une borne neutre (66) connectée à chaque borne de sortie de l'onduleur via une capacité (110).

La borne neutre est connectée à une borne d'entrée du redresseur via une inductance, les bornes de sortie de l'onduleur étant destinées à être raccordées au circuit triphasé et la borne neutre étant destinée à être raccordée au circuit monophasé.

## Description

La présente invention concerne un dispositif d'alimentation en énergie électrique pour un circuit triphasé et un circuit monophasé.

L'invention concerne également une chaîne de conversion d'énergie pour véhicule électrique, notamment ferroviaire, comprenant un tel dispositif d'alimentation.

L'invention concerne également un véhicule électrique, notamment ferroviaire, comprenant une telle chaîne de conversion d'énergie.

L'invention s'applique au domaine des transports, notamment au domaine des transports ferroviaires. En particulier, l'invention s'applique à l'alimentation électrique de véhicules électriques, tels que les locomotives, les automotrices les métro, tramways et les bus électriques.

Les véhicules électriques, notamment ferroviaires, sont généralement équipés de charges électriques auxiliaires triphasées (par exemple un compresseur d'air, un système de chauffage, ventilation et climatisation, désigné par le sigle HVAC, ou une ventilation de la chaine de traction. Dans cette demande, on appelle notamment charges électriques auxiliaires, les charges autres que le/les moteur(s) de traction du véhicule. Pour alimenter de telles charges auxiliaires triphasées, on utilise habituellement un onduleur qui délivre directement aux charges électriques triphasées l'énergie électrique permettant leur fonctionnement.

De façon classique, l'onduleur est raccordé à une source de tension alternative à l'aide d'un convertisseur, tel qu'un redresseur couplé à un condensateur de filtrage, afin de convertir la tension alternative en une tension continue pour l'onduleur. Le dispositif d'alimentation se compose alors du redresseur couplé à un condensateur de filtrage, et de l'onduleur.

Par ailleurs, il existe un besoin d'alimenter, avec le dispositif d'alimentation, des charges auxiliaires monophasées, telles que le chauffage de la cabine conducteur, les prises monophasées (de 230V par exemple) disponibles pour les usagers, les cuisines et les toilettes, en tension alternative de valeur moyenne plus faible que les valeurs moyennes des tensions en sortie de l'onduleur. Cela permet d'alimenter chaque charge auxiliaire monophasée entre une borne neutre et une borne de sortie de l'onduleur avec une tension intermédiaire aux tensions entre phases, c'est-à-dire entre des bornes de sortie de l'onduleur.

Pour cela, il est connu de créer une borne neutre en câblant des condensateurs d'un filtre de sortie du dispositif d'alimentation en étoile à chaque borne de sortie de l'onduleur, et de connecter, en outre, la borne neutre aux bornes de sortie de l'onduleur via un transformateur en connexion zigzag. Cependant, un tel dispositif nécessite des enroulements de transformateur qui impliquent une masse importante et des pertes énergétiques importantes.

Le but de l'invention est de proposer un tel dispositif d'alimentation en limitant son coût, sa masse, son volume et les pertes énergétiques lors de son utilisation.

A cet effet, l'invention a pour objet un dispositif d'alimentation en énergie électrique pour un circuit triphasé et un circuit monophasé.

Le dispositif d'alimentation comprend un redresseur configuré pour convertir une première tension alternative en une deuxième tension continue, le redresseur comportant deux bornes d'entrée pour la première tension, et deux bornes de sortie pour la deuxième tension, deux bras de commutation connectés en parallèle entre les bornes de sortie du redresseur, chaque bras de commutation comportant deux demi-bras de commutation connectés en série entre les bornes de sortie du redresseur et reliés entre eux en un point intermédiaire, chaque point intermédiaire étant connecté à une borne d'entrée respective du redresseur, chaque demi-bras de commutation comportant au moins un interrupteur commandable et/ou une diode.

Le dispositif d'alimentation comprend en outre un condensateur de filtrage connecté entre les bornes de sortie du redresseur, un onduleur configuré pour convertir la deuxième tension en trois troisièmes tensions triphasées, l'onduleur comportant deux bornes d'entrée pour la deuxième tension, reliées respectivement aux deux bornes de sortie du redresseur, et trois bornes de sortie pour les trois troisièmes tensions, et une borne neutre connectée à chaque borne de sortie de l'onduleur via une capacité.

La borne neutre est connectée, en outre, à une des bornes d'entrée du redresseur via une inductance, les bornes de sortie de l'onduleur étant destinées à être raccordées au circuit triphasé et la borne neutre étant destinée à être raccordée au circuit monophasé.

Suivant d'autres aspects avantageux, le dispositif d'alimentation selon l'invention comporte l'une ou plusieurs des caractéristiques suivantes, selon toutes les combinaisons techniquement possibles :
- le redresseur comporte uniquement deux bras de commutation,
- chaque demi-bras de commutation comporte au moins un interrupteur commandable et le dispositif d'alimentation comprend un module de commande configuré pour commander les interrupteurs du redresseur, le module de commande du redresseur étant configuré pour commander les interrupteurs du redresseur via un signal de commande périodique de rapport cyclique sensiblement égal à 50%,
- chaque demi-bras de commutation comporte au moins un interrupteur commandable et le dispositif d'alimentation comprend un module de commande configuré pour commander les interrupteurs du redresseur, le module de commande du redresseur étant configuré pour commander les interrupteurs du redresseur via un signal de commande périodique de fréquence au moins 20 fois supérieure à la fréquence des troisièmes tensions,
- chaque demi-bras de commutation comporte au moins une diode, la fréquence de la première tension alternative étant au moins 20 fois supérieure à la fréquence des troisièmes tensions
- l'onduleur comporte en outre trois bras de commutation connectés en parallèle entre les bornes d'entrée de l'onduleur, chaque bras de commutation comportant deux demi-bras de commutation connectés en série entre les bornes d'entrée de l'onduleur et reliés entre eux en un point intermédiaire, chaque point intermédiaire étant connecté à une borne de sortie respective de l'onduleur via une inductance de filtrage, chaque demi-bras de commutation comportant au moins un interrupteur commandable, et un module de commande configuré pour commander les interrupteurs de l'onduleur, et
- chaque interrupteur un composant semi-conducteur commandable de commutation et une diode connectée en antiparallèle du composant semi-conducteur.

L'invention a également pour objet une chaîne de conversion d'énergie pour un véhicule électrique, notamment ferroviaire, comprenant au moins une charge électrique triphasée, au moins une charge monophasée, un dispositif d'alimentation des au moins une charges électriques triphasée et monophasée en énergie électrique, et un système de fourniture d'une tension alternative. Le dispositif d'alimentation est tel que définie ci-dessus, le système de fourniture de tension alternative étant connectée aux bornes d'entrée du redresseur du dispositif d'alimentation, chaque charge électrique triphasée étant connecté aux bornes de sortie de l'onduleur du dispositif d'alimentation, et chaque charge monophasée étant connectée entre la borne neutre du dispositif d'alimentation et une des bornes de sortie de l'onduleur du dispositif d'alimentation.

Suivant d'autres aspects avantageux, la chaîne de conversion d'énergie selon l'invention comporte la caractéristique suivante : le système de fourniture d'une tension alternative comprend un module de génération de tension alternative et un transformateur.

L'invention a également pour objet un véhicule électrique, notamment ferroviaire comprenant une chaîne de conversion d'énergie telle que définie ci-dessus.

Ces caractéristiques et avantages de l'invention apparaîtront à la lecture de la description qui va suivre, donnée uniquement à titre d'exemple non limitatif, et faite en référence aux dessins annexés sur lesquels :
- [Fig 1] la figure 1 est une représentation schématique d'un véhicule électrique de transport, tel qu'un véhicule ferroviaire, comprenant une chaîne de conversion d'énergie, la chaîne de conversion d'énergie comportant notamment un système de fourniture d'une tension alternative et un dispositif d'alimentation selon l'invention, et
- [Fig 2] la figure 2 est une représentation schématique plus détaillée du dispositif d'alimentation de la figure 1 et un cas particulier du système de fourniture de tension alternative.

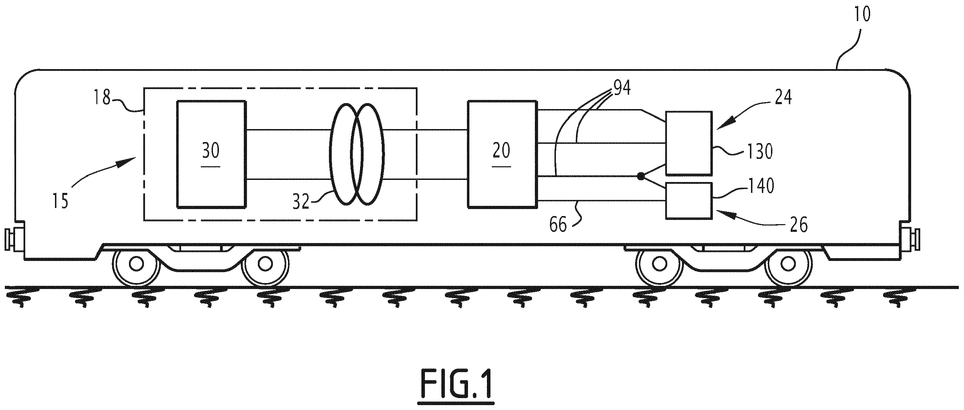

La figure 1 représente un véhicule électrique 10, notamment ferroviaire, tel qu'un train ou un tramway, comprenant une chaîne de conversion d'énergie 15.

La chaîne de conversion d'énergie 15 comprend un système de fourniture d'une tension alternative 18, relié à un dispositif d'alimentation 20 en énergie électrique pour un circuit triphasé 24 et un circuit monophasé 26 de la chaîne de conversion d'énergie 15.

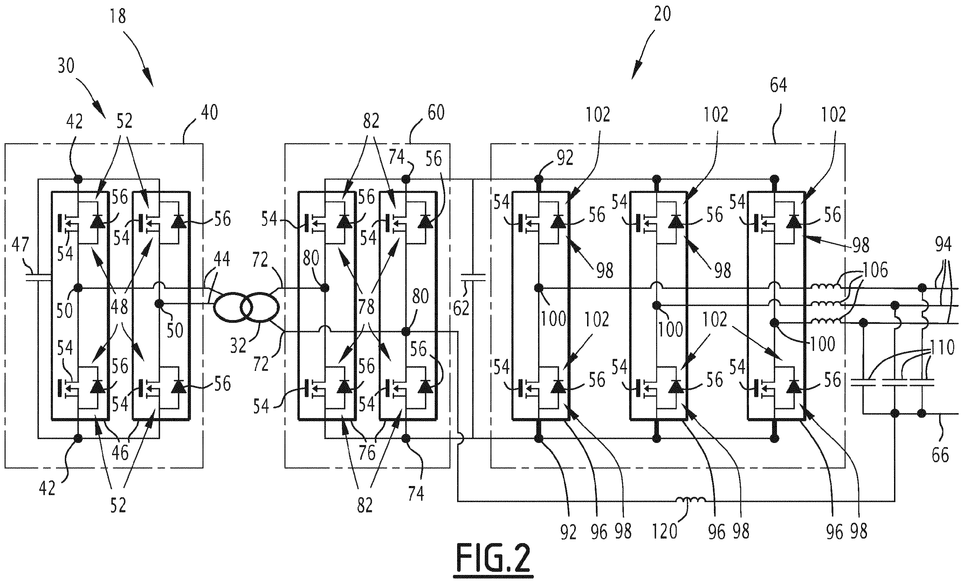

La figure 2 représente de façon plus détaillée un type de système de fourniture d'une tension alternative et le dispositif d'alimentation 20.

Dans le mode de réalisation de la figure 2, le système de fourniture d'une tension alternative 18 comprend un module de génération 30 de tension alternative relié à un transformateur 32.

Selon l'exemple de la figure 2, le module de génération 30 comporte un convertisseur 40 de tension continue en tension alternative, tel qu'un onduleur monophasé.

Le convertisseur 40 est configuré pour convertir la tension continue issue d'un convertisseur abaissant ou élevant une tension caténaire continue, d'un troisième rail ou d'une alimentation par le sol en énergie continue en une tension alternative délivrée au transformateur 32.

Selon l'exemple décrit, le convertisseur 40 comprend deux premières bornes d'entrée 42 connectées à une source d'alimentation en énergie continue non représentée, deux premières bornes de sortie 44 connectées au transformateur 32, et deux premiers bras de commutation 46 connectés en parallèle entre les premières bornes d'entrée 42. Le convertisseur 40 comprend, en outre, un condensateur 47 connecté aux deux premières bornes d'entrée 42 en parallèle des deux premiers bras de commutation 46.

Chaque premier bras de commutation 46 comporte deux premiers demi-bras de commutation 48 connectés en série entre les premières bornes d'entrée 42 et reliés entre eux en un premier point intermédiaire 50, chaque premier point intermédiaire 50 étant connecté à une première borne de sortie 44 respective.

Chaque premier demi-bras de commutation 48 comporte un ou plusieurs premiers interrupteurs 52, les premiers interrupteurs 52 étant connectés en série le cas échéant. Dans l'exemple de la figure 2, chaque premier demi-bras de commutation 48 comprend un unique premier interrupteur 52.

En variante non représentée, chaque premier demi-bras de commutation 48 comporte N demi-branches de commutation connectées en parallèle, N étant un nombre entier supérieur ou égal à 2, chaque demi-branche de commutation comportant au moins un premier interrupteur 52. Chaque premier demi-bras de commutation 48 comporte alors au moins N interrupteurs 52.

Le convertisseur 40 comprend en outre un premier module de commande, non représenté, configuré pour commander les premiers interrupteurs 52.

Chaque premier interrupteur 52 comprend, par exemple, un composant semi-conducteur commandable de commutation 54 et une diode 56 connectée en antiparallèle du composant semi-conducteur commandable 54.

Par ailleurs, en fonction du composant semi-conducteur commandable de commutation 54, la diode 56 peut faire partie intrinsèquement du composant semi-conducteur commandable de commutation 54 ou bien être absente dans le cas de composant semi-conducteur commandable de commutation 54 bi-directionnel.

Comme connu en soi, chaque composant semi-conducteur commandable de commutation 54 comporte deux électrodes de conduction conduisant un courant de puissance et une à deux électrodes de commande , chaque composant semi-conducteur commandable de commutation 54 étant commandable, via son ou ses électrodes de commande, entre un état parmi un état passant dans lequel le courant circule entre les électrodes de conduction, et un état bloqué dans lequel le courant ne circule pas entre les électrodes de conduction. La diode 56 est alors connectée entre les électrodes de conduction afin d'autoriser le courant à passer en sens inverse.

Le premier module de commande est configuré pour commander les premiers interrupteurs 52 via des premiers signaux de commande périodiques, tel que des signaux carrés.

On appelle rapport cyclique d'un signal carré, le rapport de la durée pendant laquelle le signal est à l'état haut sur une période, et la durée de la période du signal.

Par exemple, chaque premier signal de commande a un rapport cyclique sensiblement égal ou inférieur à 50%.

Le transformateur 32 est connu en soi, et comprend un ou plusieurs enroulements primaires connectés aux premières bornes de sortie 44 et un enroulement secondaire relié au dispositif d'alimentation 20. Il est configuré pour modifier l'amplitude de la tension alternative issue du module de génération 30, en fonction d'un rapport de transformation égal au rapport entre le nombre de spires de l'enroulement secondaire et le nombre de spires de l'enroulement primaire.

En variante, non représentée, le système de fourniture d'une tension alternative 18 comprend un pantographe en contact avec une caténaire fournissant une tension caténaire alternative, ainsi relié à un réseau de distribution électrique, et un transformateur.

Le pantographe est apte à délivrer une tension alternative issue du réseau de distribution électrique à un enroulement primaire du transformateur, et le transformateur est configuré pour diminuer l'amplitude de ladite tension alternative en fonction d'un rapport de transformation, et à délivrer la tension alternative d'amplitude diminuée via un enroulement secondaire.

Le dispositif d'alimentation 20 est configuré pour alimenter, à partir de la tension alternative fournie par le système de fourniture d'une tension alternative 18, le circuit triphasé 24 en tensions triphasées, et le circuit monophasé 26 avec une tension alternative.

Le dispositif d'alimentation 20 comprend un redresseur 60, un condensateur de filtrage 62, et un onduleur 64 relié au redresseur 60, l'onduleur étant raccordé au circuit triphasé 24.

Le dispositif d'alimentation 20 comprend en outre une borne neutre 66 raccordée au circuit monophasé 26.

Le redresseur 60 est configuré pour convertir la tension alternative issue du système de fourniture d'une tension alternative 18, en une tension continue.

Le redresseur 60 comprend deux deuxièmes bornes d'entrée 72 connectées au système de fourniture d'une tension alternative 18, plus précisément à l'enroulement secondaire du transformateur 32, deux deuxièmes bornes de sortie 74 configurée pour délivrer la tension continue, et deux deuxièmes bras de commutation 76 connectés en parallèle entre les deuxièmes bornes de sortie 74.

En particulier, le redresseur 60 comprend uniquement deux deuxièmes bras de commutation 76.

Chaque deuxième bras de commutation 76 comporte deux deuxièmes demi-bras de commutation 78 connectés en série entre les deuxièmes bornes de sortie et reliés entre eux en un deuxième point intermédiaire 80, chaque deuxième point intermédiaire 80 est connecté à une deuxième borne d'entrée 72 respective.

En variante non représenté, un des point intermédiaire 80 est connecté à la deuxième borne d'entrée 72 correspondante via une inductance.

Chaque deuxième demi-bras de commutation 78 comporte au moins un deuxième interrupteur 82. Par exemple, les deuxièmes demi-bras de commutation 78 sont similaires aux premiers demi-bras de commutation 48.

Le redresseur 60 comprend en outre un deuxième module de commande, non représenté, configuré pour commander les deuxièmes interrupteurs. En variante, le deuxième module de commande est confondu avec le premier module de commande.

Par exemple, les deuxièmes interrupteurs 82 sont similaires aux premiers interrupteurs 52 et comprennent chacun un composant semi-conducteur commandable de commutation 54 et une diode 56 connectée en antiparallèle du composant semi-conducteur commandable de commutation 54.

Le deuxième module de commande est configuré pour commander les deuxièmes interrupteurs 82 via des deuxièmes signaux de commande périodiques, tel que des signaux carrés.

De préférence, chaque deuxième signal de commande a un rapport cyclique sensiblement égal à 50%.

En variante non représentée, chaque deuxième demi-bras de commutation 78 comprend au moins une diode, commandée naturellement en fonction de l'alternance de la tension entre les deuxièmes bornes d'entrée 72 et d'un courant minimum nécessaire à la commutation naturelle de la diode. Dans ce cas, le module de commande du redresseur est inexistant et seul le fonctionnement alternatif du transformateur 32 garantit la commutation des diodes avec un rapport cyclique de 50%.

Le condensateur de filtrage 62 est connecté entre les deuxièmes bornes de sortie 74.

L'onduleur 64 est un onduleur triphasé, comme connu en soi. Il est configuré pour convertir la tension continue, délivrée entre les deuxièmes bornes de sortie 74, en trois troisièmes tensions triphasées.

Les trois tensions triphasées sont trois tensions alternatives sinusoïdales, de même fréquence et même amplitude, chacune des tensions triphasées étant déphasée par rapport à une autre de 2π/3 radians.

L'onduleur 64 comporte deux troisièmes bornes d'entrée 92, reliées respectivement aux deux deuxièmes bornes de sortie 74, et trois troisièmes bornes de sortie 94 raccordées au circuit triphasé 24.

De façon classique, l'onduleur 64 comprend en outre trois troisièmes bras de commutation 96 connectés en parallèle entre les troisièmes bornes d'entrée 92.

Chaque troisième bras de commutation 96 comporte deux troisièmes demi-bras de commutation 98 connectés en série entre les troisièmes bornes d'entrée 92 et reliés entre eux en un troisième point intermédiaire 100, chaque troisième point intermédiaire 100 étant connecté à une troisième borne de sortie 94 respective.

Chaque troisième demi-bras de commutation comporte au moins un troisième interrupteur 102. Par exemple, les troisièmes demi-bras de commutation 98 sont similaires aux premiers demi-bras de commutation 48, et/ou aux deuxièmes demi-bras de commutation 78.

L'onduleur 64 comprend en outre un troisième module de commande, non représenté, configuré pour commander les troisièmes interrupteurs 102. En variante, le troisième module de commande est confondu avec le premier module de commande et/ou avec le deuxième module de commande.

Par exemple, les troisièmes interrupteurs 102 sont similaires aux premiers interrupteurs 52 et comprennent chacun un composant semi-conducteur commandable de commutation 54 et une diode 56 connectée en antiparallèle du composant semi-conducteur commandable de commutation 54.

En complément, chaque troisième point intermédiaire 100 est connecté à une troisième borne de sortie 94 respective via une inductance 106 de filtre triphasé sinusoïdal.

Le troisième module de commande est configuré pour commander les troisièmes interrupteurs 102 via des troisièmes signaux de commande périodique, tel que des signaux carrés.

Par exemple, chaque troisième signal de commande a un rapport cyclique résultant d'une modulation par un signal modulant sinusoïdal et un signal porteur en dent de scie dont la période est beaucoup plus élevée que la période du signal modulant sinusoïdal.

A titre d'exemple, les tensions triphasées délivrées par les troisièmes bornes de sortie 94 ont une fréquence de 50 Hertz ou 60Hertz.

En complément, chaque deuxième signal de commande a une fréquence au moins 20 fois supérieure à la fréquence des tensions triphasées délivrées par les troisièmes bornes de sortie 94. A titre d'exemple, chaque deuxième signal de commande a alors une fréquence supérieure à 1 kilohertz.

Dans le cas où chaque deuxième demi-bras de commutation 78 comprend au moins une diode, la fréquence de la première tension alternative est au moins 20 fois supérieure à la fréquence des troisièmes tensions

La borne neutre 66 est connectée à chaque troisième borne de sortie 94 via un condensateur/une capacité 110, les condensateurs appartenant au filtre triphasé sinusoïdal et étant câblés en étoile. La borne neutre 66 est ainsi reliée au centre du câblage en étoile.

En outre, la borne neutre 66 est connectée à une des deuxièmes bornes d'entrée 72 du redresseur 60 via une inductance 120.

Par exemple, la borne neutre 66 est connectée à une des deuxièmes bornes d'entrée 72, par une des deuxièmes bornes intermédiaires 80.

L'amplitude de la tension comprise entre la borne neutre 66 et une des troisièmes bornes de sortie 94 est alors inférieure à l'amplitude des tensions comprises entre deux troisièmes bornes de sortie 94.

On appelle tension efficace, la moyenne quadratique d'une tension alternative.

A titre d'exemple, la tension efficace entre la borne neutre 66 et une des troisièmes bornes de sortie 94 est égale à 230 V, soit égale à la tension entre deux troisièmes bornes de sortie 94 divisée par la racine de 3 et la tension efficace entre deux troisièmes bornes de sortie 94 est égale à 400V.

Selon l'exemple de la figure 1, le circuit triphasé 24 comprend une charge électrique auxiliaire triphasée 130 connectée à chaque troisième borne de sortie 94, telles qu'un compresseur d'air, un système HVAC, ou une ventilation de la chaine de traction.

Selon l'exemple de la figure 1, le circuit monophasé 26 comprend une charge monophasée 140 connectée entre la borne neutre 66 et une des troisièmes bornes de sortie 94.

La charge 140 est par exemple, un chauffage d'une cabine conducteur, , des prises monophasées (de 230V par exemple) disponibles pour des usagers, de cuisines et de toilettes.

En variante, non représentée, le circuit triphasé 24 et le circuit monophasé 26 sont confondus en un unique circuit raccordé aux troisièmes bornes de sortie 94 et à la borne de sortie neutre 66.

Le dispositif d'alimentation 20 permet alors d'alimenter en énergie électrique le circuit triphasé avec des tensions triphasées, et le circuit monophasé avec une tension alternative, de valeur efficace inférieure à celle des tensions triphasées.

Le dispositif d'alimentation 20 permet de délivrer une tension alternative à la borne neutre 66, en limitant la masse et le volume du dispositif, ainsi que le coût des matériaux utilisés, et les pertes énergétiques durant son utilisation.

En effet, le dispositif d'alimentation 20 utilise un deuxième bras de commutation 76 déjà existant du redresseur 60, afin de créer un point milieu, correspondant à un deuxième point intermédiaire 80. Il ne nécessite donc pas l'ajout d'un bras de commutation supplémentaire pour avoir un tel point milieu, ce qui permet notamment de diminuer le nombre de composants semi-conducteurs commandables de commutation utilisés, et de matériaux utilisé pour la commande d'un tel bras de commutation.

## Revendications

1. Dispositif d'alimentation (20) en énergie électrique pour un circuit triphasé (24) et un circuit monophasé (26), le dispositif d'alimentation (20) comprenant :
- un redresseur (60) configuré pour convertir une première tension alternative en une deuxième tension continue, le redresseur (60) comportant :
+ deux bornes d'entrée (72) pour la première tension, et deux bornes de sortie (74) pour la deuxième tension,
+ deux bras de commutation (76) connectés en parallèle entre les bornes de sortie (74) du redresseur (60), chaque bras de commutation (76) comportant deux demi-bras de commutation (78) connectés en série entre les bornes de sortie (74) du redresseur (60) et reliés entre eux en un point intermédiaire (80), chaque point intermédiaire (80) étant connecté à une borne d'entrée (72) respective du redresseur (60), chaque demi-bras de commutation (78) comportant au moins un interrupteur (82) commandable et/ou une diode,
- un onduleur (64) configuré pour convertir la deuxième tension en trois troisièmes tensions triphasées, l'onduleur (64) comportant deux bornes d'entrée (92) pour la deuxième tension, reliées respectivement aux deux bornes de sortie (74) du redresseur (60), et trois bornes de sortie (94) pour les trois troisièmes tensions, et
- une borne neutre (66) connectée à chaque borne de sortie (94) de l'onduleur (64) via un condensateur (110),
**caractérisé en ce que** la borne neutre (66) est connectée, en outre, à une des bornes d'entrée (72) du redresseur (60) via une inductance (120),
les bornes de sortie (94) de l'onduleur (64) étant destinées à être raccordées au circuit triphasé (24) et la borne neutre (66) étant destinée à être raccordée au circuit monophasé (26).

2. Dispositif d'alimentation (20) selon la revendication 1, dans lequel le dispositif d'alimentation comprend un condensateur de filtrage (62) connecté entre les bornes de sortie (74) du redresseur (60).

3. Dispositif d'alimentation (20) selon la revendication 1 ou 2, dans lequel chaque demi-bras de commutation (78) comporte au moins un interrupteur (82) commandable et le dispositif d'alimentation comprend un module de commande du redresseur (60) configuré pour commander les interrupteurs commandables (82) du redresseur (60), le module de commande du redresseur (60) étant configuré pour commander les interrupteurs commandables (82) du redresseur (60) via un signal de commande périodique de rapport cyclique sensiblement égal à 50%.

4. Dispositif d'alimentation (20) selon l'une quelconque des revendications précédentes, dans lequel chaque demi-bras de commutation (78) comporte au moins un interrupteur (82) commandable et le dispositif d'alimentation comprend un module de commande du redresseur configuré pour commander les interrupteurs commandables (82) du redresseur (60), le module de commande du redresseur (60) étant configuré pour commander les interrupteurs commandables (82) du redresseur (60) via un signal de commande périodique de fréquence au moins 20 fois supérieure à la fréquence des troisièmes tensions.

5. Dispositif d'alimentation (20) selon l'une quelconque des revendications 1 à 3, dans lequel chaque demi-bras de commutation (78) comporte au moins une diode, la fréquence de la première tension alternative étant au moins 20 fois supérieure à la fréquence des troisièmes tensions.

6. Dispositif d'alimentation (20) selon l'une quelconque des revendications précédentes, dans lequel l'onduleur (64) comporte en outre :
- trois bras de commutation (96) connectés en parallèle entre les bornes d'entrée (92) de l'onduleur (64), chaque bras de commutation (96) comportant deux demi-bras de commutation (98) connectés en série entre les bornes d'entrée (92) de l'onduleur (64) et reliés entre eux en un point intermédiaire (100), chaque point intermédiaire (100) étant connecté à une borne de sortie (94) respective de l'onduleur (64) via une inductance (106) de filtrage, chaque demi-bras de commutation (98) comportant au moins un interrupteur (102) commandable, et
- un module de commande de l'onduleur configuré pour commander les interrupteurs (102) de l'onduleur (64).

7. Dispositif d'alimentation (20) selon l'une quelconque des revendications précédentes, dans lequel chaque interrupteur commandable (52, 82, 102) comporte un composant semi-conducteur commandable de commutation (54) et une diode (56) connectée en antiparallèle du composant semi-conducteur.

8. Chaîne de conversion d'énergie (15) pour un véhicule électrique (10), notamment ferroviaire, comprenant au moins une charge électrique triphasée (130), au moins une charge électrique monophasée (140), un dispositif d'alimentation (20) en énergie électrique des au moins une charges électriques triphasée et monophasée (130), et un système de fourniture d'une tension alternative (18),
**caractérisé en ce que** le dispositif d'alimentation (20) est selon l'une quelconque des revendications précédentes,
le système de fourniture de tension alternative (18) étant connectée aux bornes d'entrée (72) du redresseur (60) du dispositif d'alimentation (20), chaque charge électrique triphasée (130) étant connecté aux bornes de sortie (94) de l'onduleur (64) du dispositif d'alimentation (20), et chaque charge électrique monophasée (140) étant connectée à la borne neutre (66) du dispositif d'alimentation (20), de préférence entre la borne neutre et une des bornes de sortie (94) de l'onduleur (64) du dispositif d'alimentation (20).

9. Chaîne de conversion d'énergie (15) selon la revendication précédente, dans laquelle le système de fourniture d'une tension alternative (18) comprend un module de génération (30) de tension alternative et un transformateur (32).

10. Véhicule électrique (10), notamment ferroviaire, comprenant une chaîne de conversion d'énergie (15), **caractérisé en ce que** la chaîne de conversion d'énergie (15) est selon la revendication 9 ou 10.
